# EUROPÄISCHE PATENTSCHRIFT

(11) **EP 2 339 197 B1**
(45) Veröffentlichungstag und Bekanntmachung des Hinweises auf die Patenterteilung: **21.12.2011**
(21) Anmeldenummer: 10015485.5
(22) Anmeldetag: 09.12.2010
(51) Int. Cl.: F16D 55/22

(54) **Scheibenbremse, Bremssattel einer solchen Bremse, sowie Verfahren zum Herstellen eines solchen Bremssattels**
Disc brake, brake calliper of such a brake and method for producing such a brake calliper
Frein à disque, disque de frein d'un tel frein ainsi que procédé de fabrication d'un tel disque de frein

(30) Priorität: 17.12.2009 DE 102009058604
(43) Veröffentlichungstag der Anmeldung: 29.06.2011
(73) Patentinhaber: Wabco Radbremsen GmbH, 68229 Mannheim (DE)
(72) Erfinder: Jungmann, Hans-Christian, Dipl.-Ing., 69517 Gorxheimertal (DE); Stumpf, Martin, Dipl.-Ing., 68623 Lampertheim (DE)
(74) Vertreter: Leinweber & Zimmermann

(56) Entgegenhaltungen:
- WO-A1-00/65247
- DE-A1-102007 033 165
- DE-C1- 10 106 591

## Beschreibung

Die Erfindung betrifft nach einem ersten Aspekt eine Scheibenbremse, insbesondere für Nutzfahrzeuge, mit einem Bremssattel und einem eine Rückenplatte und einen Reibbelag aufweisenden Bremsbacken, wobei die Rückenplatte mit ihrer dem Reibbelag entgegengesetzten Seite an einer Wand des Bremssattels anliegt.

Scheibenbremsen der oben genannten Art sind z.B. aus DE-A-2007 033 165 bekannt. Dabei handelt es sich bei dem an der Wand des Bremssattels anliegenden Bremsbacken um einen Bremsbacken auf der Reaktionsseite der Bremse, wohingegen eine Zuspanneinrichtung sowie ein weiterer Bremsbacken auf einer Zuspannseite der Bremse liegt.

Über die genannte Wand des Bremssattels wird beim Bremsen der zugehörige Bremsbacken gegen die Bremsscheibe gepreßt. Dabei auftretende Umfangskräfte werden entweder seitlich in Abstützhörner eines Bremsenträgers bei einer Gleitsattelscheibenbremse oder bei einer direkten Lagerung im Bremssattelschenkel, wie beispielsweise bei einem Festsattel, in seitliche Abstützleisten darin abgeleitet.

Während des Anpressens beim Bremsen wird zwischen den Kontaktflächen des Sattels einerseits und des Bremsbackens andererseits eine Haftreibung erzeugt, die - je nach Oberflächenbeschaffenheit/-kontur - den Bremsbacken lageoptimiert in den Führungen halten soll. Ist die Haftreibung aber nicht ausreichend, kommt es zu einem nachteiligen HerausdrehenNerkanten des Bremsbackens aus/in den Führungen. Dieser Effekt stellt sich insbesondere in Drehrichtung der Bremsscheibe bei Vorwärtsfahrt ein. Ein solches Herausdrehen/Verkanten des Bremsbackens beeinträchtigt nicht nur die Bremsenfunktion, es wirkt auch wegen der ungleichmäßigen Belagabstützung nachteilig auf die sich kontaktierenden Bereiche mit einem übermäßigen örtlichen Verschleiß.

Um einerseits die Maßgenauigkeit und andererseits eine geeignete Oberflächenstruktur der genannten Wand des Sattels herzustellen, werden spanabhebende Bearbeitungsverfahren eingesetzt. Angesichts der großen Ausdehnung der betreffenden Wand des Bremssattels werden Scheibenfräser und Walzenfräser als besonders geeignet angesehen. Der Bremssattel ist in aller Regel aus einem Gußwerkstoff.

Werden bei derart hergestellten Bremssätteln, insbesondere in deren Neuzustand, neue Bremsbacken eingesetzt, beispielsweise bei der Erstausrüstung, und anschließend Bremsenfunktionstests durchgeführt, kommt es häufig zu dem oben beschriebenen HerausdrehenNerkanten. Dies gilt insbesondere dann, wenn die Rückenplatte mit einem Schutzüberzug versehen ist (beispielsweise Korrosionsschutz bei metallischer Ausführung), weil die notwendige Haftreibung nicht aufgebaut werden kann. Insbesondere wirkt der oben erwähnte Schutzüberzug auf der Rückenplatte wie ein "Schmierfilm".

Zwar sind Untersuchungen mit Wandungen durchgeführt worden, die gänzlich mit unterbrochenen Strukturen ausgeführt sind. Diese Ausgestaltungen konnten jedoch das obige Problem nicht lösen, weil auch in einem solchen Falle große Anlageflächen vorhanden sind, die selbst bei erhöhter Flächenpressung den Effekt des Herausdrehens/Verkantens nicht verhindern. Zudem sind Herstellungsverfahren für solche Wandungen mit unterbrochenen Strukturen aufwendig und unwirtschaftlich.

Ein aus einem Gußwerkstoff hergestellter Bremssattel weist in der Regel eine gewisse Rauheit auf. Darunter wird eine Unebenheit der Oberfläche verstanden, also eine Gestaltabweichung bei technischen Oberflächen. Das Maß der Rauheit hängt dabei vom Herstellungsverfahren ab. Bei im Gußverfahren hergestellten Bremssätteln reicht die Rauheit der auf Maßhaltigkeit mechanisch bearbeiteten Funktionsfläche - hier die Wandung - für die erforderliche Haftung bei Neuteilen nicht aus, um einen Formschluß zu erzeugen, der das beschriebene HerausdrehenNerkanten verhindern könnte, weil die als Resultat der Rauheit vorstehenden Flächen nicht in das Gefüge der (metallischen) Rückenplatte eindringen.

An dieser Stelle sei noch ausdrücklich darauf hingewiesen, daß sich die Erfindung auf einteilige sowie auf mehrteilige Bremssättel bezieht, d.h. auf solche Bremssättel, bei denen diejenige Wand, an der im Betrieb eine Rückenplatte eines einen Reibbelag aufweisenden Bremsbacken anliegt, einstückig mit dem restlichen Sattel ausgeführt ist, und solche, bei denen die genannte Wand Teil eines angeschraubten oder sonstwie befestigten Verschlußdeckels des Bremssattels ist. Ferner bezieht sich die Erfindung insbesondere auf solche Bremssättel, bei denen die genannte Wand weitestgehend geschlossen ist und/oder bei denen die Wand von der genannten Rückenplatte im Betrieb weitestgehend überdeckt ist.

Der Erfindung liegt die Aufgabe zugrunde, die Scheibenbremse der eingangs genannten Art derart weiterzubilden, daß eine verläßliche Positionierung des Bremsbackens bezüglich der zugehörigen Wand des Bremssattels ohne großen Aufwand erreicht wird.

Erfindungsgemäß wird die gestellte Aufgabe durch mindestens einen Ansatz an der Wand des Bremssattels gelöst, der sich beim Zuspannen der Bremse in die dem Reibbelag entgegengesetzte Seite der Rückenplatte eindrückt.

Mit anderen Worten wird erfindungsgemäß der Reibschluß zwischen dem Bremsbacken und der zugehörigen Wand des Bremssattels durch einen Formschluß ergänzt, um das oben beschriebene Herausdrehen/Verkanten des Bremsbackens zu unterbinden. Der Ansatz wirkt nämlich einem solchen Herausdrehen/Verkanten entgegen, sobald er in die Rückenplatte eingedrückt worden ist.

Der Ansatz kann erfindungsgemäß prinzipiell beliebig ausgestaltet sein. Erfindungsgemäß bevorzugt ist er jedoch einstückig mit der Wand des Bremssattels ausgebildet. Dies hat insbesondere Vorteile hinsichtlich des Herstellungsverfahrens.

Erfindungsgemäß weiter bevorzugt hat der Ansatz die Form eines Dorns, den man auch als "Spike" bezeichnen kann. Ein solcher Dorn (Spike) ist besonders geeignet, sich in die Rückenplatte des Bremsbackens einzudrücken.

Erfindungsgemäß weiter bevorzugt ist der Ansatz scharfkantig. Auch diese Ausgestaltung fördert das Eindrücken des Ansatzes in die Rückenplatte, um den oben erwähnten Formschluß herzustellen.

Nach einer besonders bevorzugten Ausführungsform der Erfindung liegt der Ansatz auf der Bremsscheibeneinlaufseite bei Vorwärtsfahrt. Da nämlich das oben beschriebene HerausdrehenNerkanten um eine auf der Bremsscheibenauslaufseite liegende (gedachte) Achse herum erfolgt, ist die Anbringung des Ansatzes auf der Bremsscheibeneinlaufseite angesichts der auftretenden Momente am wirkungsvollsten.

Nach einer weiter bevorzugten Ausführungsform der Erfindung ist vorgesehen, daß der Ansatz sich in einen nach radial außen liegenden Abschnitt der Rückenplatte eindrückt. Bei dieser Ausgestaltung wird der Ansatz nämlich auch in einem radial vergleichsweise außen liegenden Abschnitt der entsprechenden Wand des Bremssattels ausgebildet sein. Insbesondere dann, wenn die genannte Wand des Bremssattels mittels eines Scheibenfräsers (nach-)bearbeitet wird, ist diese Lage des Ansatzes herstellungstechnisch besonders günstig, weil der Scheibenfräser über die zur Aufnahme der Bremsscheibe vorgesehene Öffnung in das Innere des Bremssattels eingeführt wird.

Erfindungsgemäß weiter bevorzugt ist vorgesehen, daß der Bremssattel eine Schutzschicht aufweist, und zwar auch auf der Wand, an der die Rückenplatte anliegt. Unter einer Schutzschicht wird auch ein Überzug, eine Beschichtung oder ähnliches verstanden. Die Schutzschicht kann im Wege des KTL-Verfahrens (kathodische Tauchlackierung) ausgebildet sein.

Eine solche Schutzschicht dient insbesondere dem Schutz unter Extrembedingungen, wie beispielsweise hohe Temperaturen, Steinschlag etc. Insbesondere das Ausbilden der Schutzschicht auf derjenigen Wand, an der die Rückenplatte anliegt, ist bei den erfindungsgemäßen Bremsen unkritisch, im Gegensatz zu den herkömmlichen Bremsen. Wegen des erfindungsgemäßen Ansatzes an der Wand des Bremssattels kann nämlich ein gewisser "Schmiereffekt" der Schutzschicht in Kauf genommen werden, der die Haftreibung erheblich herabsetzt. Die erfindungsgemäße Scheibenbremse ist nämlich - wie oben im einzelnen ausgeführt - hinsichtlich der Halterung des Bremsbackens gegen HerausdrehenNerkanten nicht auf die Haftreibung angewiesen, weil der erfindungsgemäße Ansatz das Herausdrehen/Verkanten durch einen Formschluß unterbindet.

Erfindungsgemäß bevorzugt hat der Ansatz eine Höhe von 0,1 mm bis 2 mm, weiter bevorzugt 0,1 mm bis 0,3 mm. "Höhe" bezeichnet dabei den Abstand des in Axialrichtung der Bremse gesehenen äußersten Punkts des Ansatzes von der dem Bremsbacken zugewandten Oberfläche der zugehörigen Wandung des Bremssattels. Dabei liegen die genannte Oberfläche und die dem Reibbelag entgegengesetzte Seite der Rückenplatte parallel zueinander und zu der Bremsscheibe.

Neben der oben im einzelnen beschriebenen Scheibenbremse schafft die Erfindung auch einen Bremssattel für eine solche Scheibenbremse.

Schließlich schafft die Erfindung auch ein Verfahren zum Herstellen eines Bremssattels einer solchen Scheibenbremse, bei dem diejenige Wand, an der die Rückenplatte des Bremsbackens im Betrieb anliegt, mit einem spanabhebenden Werkzeug bearbeitet wird.

Erfindungsgemäß ist dabei vorgesehen, daß der Ansatz durch Auslassen bei der spanabhebenden Bearbeitung ausgebildet wird.

Mit anderen Worten wird die einschlägige Wand des Bremssattels mit dem spanabhebenden Werkzeug bearbeitet, jedoch dort, wo der Ansatz ausgebildet werden soll, wird weniger abgetragen als anderswo, gegebenenfalls gar nichts abgetragen, wodurch der Ansatz stehenbleibt.

Dieses Verfahren ist besonders aufwandsarm.

Im folgenden ist die Erfindung anhand eines bevorzugten Ausführungsbeispiels unter Bezugnahme auf die beiliegende Zeichnung mit weiteren Einzelheiten näher erläutert. Dabei zeigen
- Figur 1: eine schematische perspektivische Ansicht eines Bremssattels nach einem Ausführungsbeispiel der Erfindung,
- Figur 2: eine teilweise geschnittene perspektivi- sche Ansicht des Bremssattels nach Figur 1,
- Figur 2.1: eine vergrößerte Teilschnittansicht aus Figur 2,
- Figur 3: die gleiche Ansicht wie Figur 2, jedoch mit montiertem Bremsbacken und

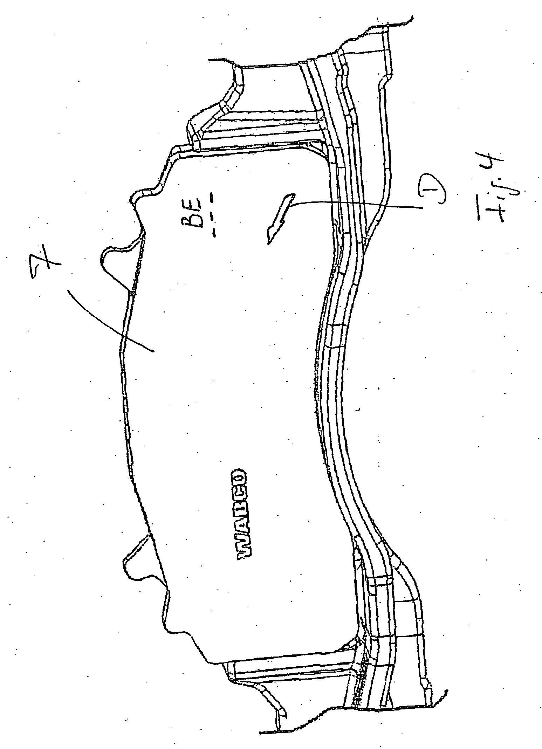

- Figur 4: eine Draufsicht auf die Rückenplatte des Bremsbackens nach Figur 3.

Der in der Zeichnung dargestellte Bremssattel 1 ist Teil einer Scheibenbremse. Er umfaßt wenigstens eine in der Zeichnung nicht dargestellte Bremsscheibe. Einseitig, d.h. auf der Zuspannseite, ist in dem Bremssattel 1 eine Zuspanneinrichtung 2 angeordnet. Die Zuspanneinrichtung 2 dient dazu, die beidseits der Bremsscheibe in einem Bremsenträger 3 und/oder in dem Bremssattel 1 in daran seitlich ausgebildeten Anlageflächen 4, 5 in Axialrichtung der Bremse geführte und abgestützte und aus einem Reibbelag 6 sowie einer Rückenplatte (Belagträger) 7 bestehenden Bremsbacken, von denen einer mit der Bezugszahl 8 bezeichnet ist, gegen die Bremsscheibe zu drücken, wobei der der Zuspanneinrichtung 2 gegenüberliegende Bremssattelschenkel 9 eine Wandung 10 aufweist, die im wesentlichen vollflächig ausgebildet ist und mit der korrespondierenden und der Wandung 10 zugewandten Seite der dortigen Rückenplatte 7 in Wirkkontakt steht. Die Wandung 10 und die zugehörige Seite der Rückenplatte 7 sind als Kontaktflächen zueinander eben ausgebildet und liegen parallel zu einer Hauptebene der Bremsscheibe. Bei herkömmlichen Bremsen weisen die beiden genannten Kontaktflächen keine Vorsprünge und keine korrespondierenden Vertiefungen auf.

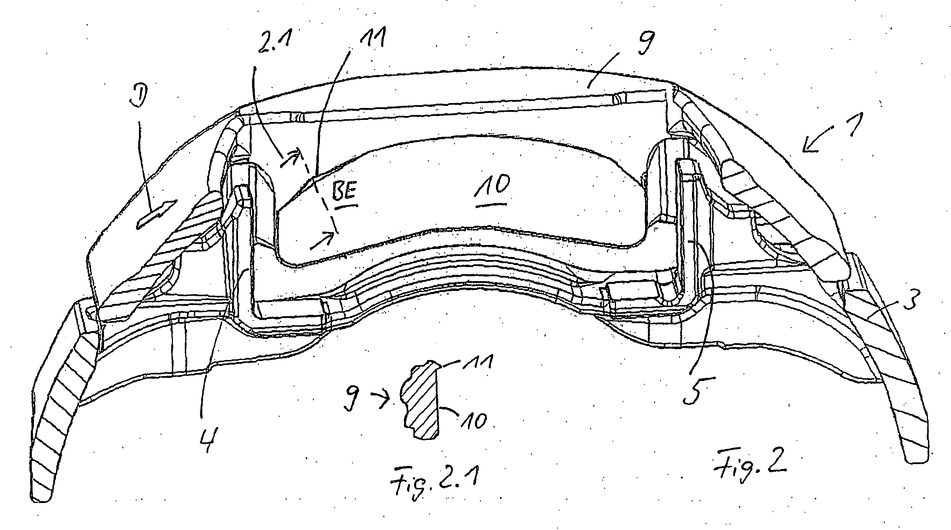

Bei der in der Zeichnung dargestellten Bremse ist aber demgegenüber die Wandung 10 mit einem Ansatz 11 versehen, der nach Art eines Dorns bzw. Spikes oder einer scharfen Kante partiell ausgebildet ist. Er ist scharfkantig. Er steht aus der Ebene der Wand 10 hervor, vgl. insbesondere Figur 2.1, und zwar um einen Betrag von vorzugsweise 0,1 mm bis 0,3 mm. Werden beim Bremsvorgang, etwa im Neuzustand der Teile bzw. im Ersteinsatz, die Wand 10 des Bremssattels 1 und die Rückenplatte 7 des Bremsbackens 8 gegeneinander gepreßt, so drückt sich der Ansatz 11 in die Rückenplatte 7 ein. Eine gegebenenfalls auf die Rückenplatte 7 aufgebrachte Schutzschicht, etwa als Korrosionsschutz, wird von dem Ansatz durchdrungen. Er hält dadurch die Rückenplatte 7 und damit den Bremsbacken 8 "krallenartig" in Position.

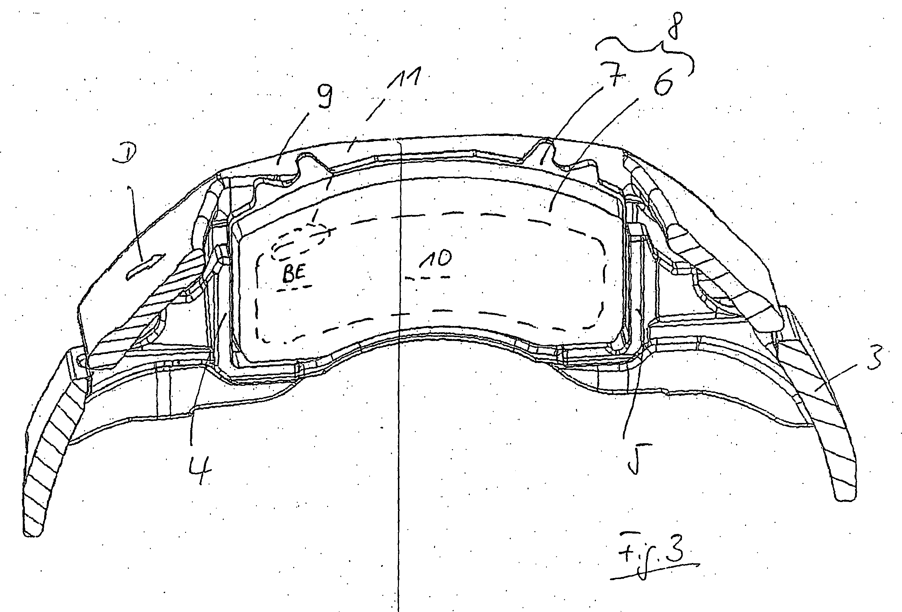

Die Drehrichtung der (nicht gezeigten) Bremsscheibe bei Vorwärtsfahrt ist mit dem Buchstaben D bezeichnet. Wie insbesondere Figur 3 zu entnehmen ist, liegt der Ansatz 11 in eingebautem Zustand im annähernd radial äußeren und bremsscheibeneinlaufseitigen Bereich des Bremsbackens 8. Dies ist deshalb von Vorteil, weil der Bremsbacken 8 bei Bremsung während Vorwärtsfahrt dazu neigt, sich um einen Punkt im unten rechts gelegenen Bereich des Bremsbackens 8 zu drehen, vgl. Figur 3. Daran wird er durch den Formschluß gehindert, der sich aus den krallenartigen Eindrücken des Ansatzes 11 in die Rükkenplatte 7 des Bremsbackens 8 ergibt.

Der erwähnte Formschluß durch das Eindrücken des Ansatzes 11 in die Rückenplatte 7 hinein wird sich auch dann einstellen, wenn der Bremssattel 1 mit einem Schutzüberzug versehen sein sollte. Daher ist es nicht erforderlich, beispielsweise die Wand 10 des Bremssattels 1 abzudecken/abzukleben, wenn der Schutzüberzug auf dem Bremssattel 1 angebracht wird, und sie hinterher wieder zu entfernen, was wirtschaftliche Vorteile mit sich bringt. Denn der Ansatz 11 (Dorn/Spike/scharfe Kante) drückt sich durch den Schutzüberzug des Bremssattels hindurch in die Rückenplatte 7 ein.

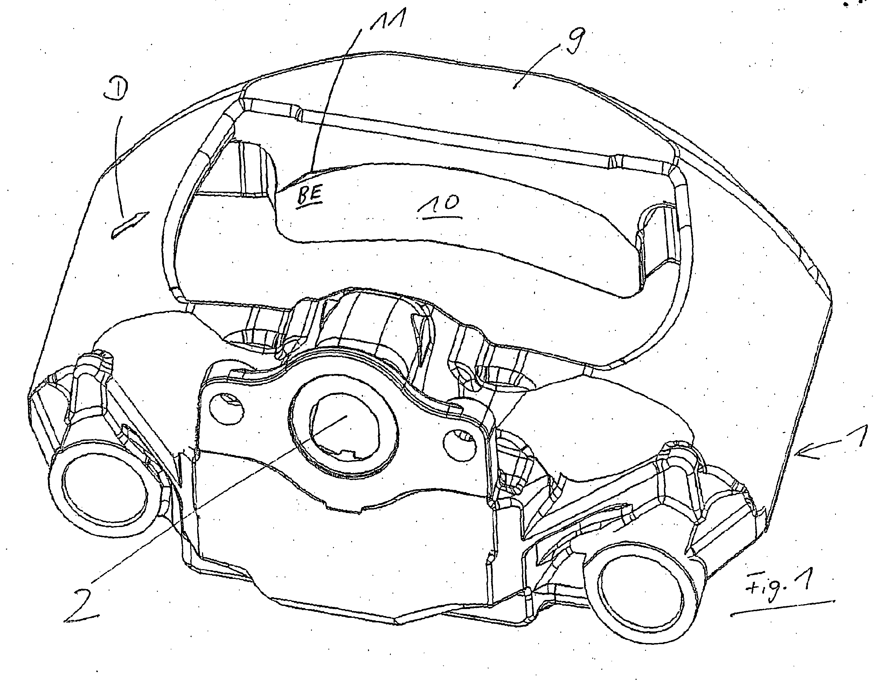

Zur Bearbeitung der Wand 10 wird ein geeignetes Werkzeug, beispielsweise ein Scheibenfräser und/oder ein Walzenfräser, in Figur 1 von unten her, also durch diejenige Öffnung in das Innere des Bremssattels 1 eingeführt, in die in montiertem Zustand auch die Bremsscheibe in den Bremssattel 1 hineinragt. Mit dem Fräser wird die Wand 10 spanabhebend bearbeitet, um sie sachgemäß auszugestalten, insbesondere was die Maßhaltigkeit/Bemaßung und die Oberflächenbeschaffenheit angeht. Dabei wird nach einem bevorzugten Aspekt der Erfindung dort, wo der Ansatz 11 später liegen soll, weniger oder gar nicht spanabhebend gearbeitet. Im Ergebnis bleibt der Ansatz 11 als (scharfkantiger) Höcker stehen.

Die in der obigen Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Verfahren zum Herstellen eines Bremssattels (1) einer Scheibenbremse, wobei
der Bremssattel eine Wand (10) aufweist, an der im Betrieb eine Rückenplatte (7) eines einen Reibbelag (6) aufweisenden Bremsbacken (8) anliegt, wobei
der Bremssattel aus einem Gußwerkstoff gegossen wird, wobei
die Wand, an der die Rückenplatte im Betrieb anliegt, mit einem Scheibenfräser und/oder einem Walzenfräser spanabhebend bearbeitet wird, **dadurch gekennzeichnet, daß**
durch Auslassen beim spanabhebenden Bearbeiten ein Ansatz (11) ausgebildet wird, der sich beim Zuspannen der Bremse in die dem Reibbelag entgegengesetzte Seite der Rückenplatte eindrückt.

2. Verfahren nach Anspruch 1, **dadurch gekennzeichnet, daß** der Ansatz (11) scharfkantig ausgebildet wird.

3. Verfahren nach Anspruch 1 oder 2, **dadurch gekennzeichnet, daß** auf den Bremssattel (1) eine Schutzschicht aufgebracht wird, und zwar auch auf diejenige Wand (10), an der die Rückenplatte (7) anliegt.

4. Bremssattel, hergestellt mittels des Verfahrens nach einem der vorangehenden Ansprüche.

5. Scheibenbremse, insbesondere für Nutzfahrzeuge, mit
einem Bremssattel (1) aus Gußwerkstoff und
einem eine Rückenplatte (7) und einen Reibbelag (6) aufweisenden Bremsbacken (8),
wobei die Rückenplatte mit ihrer dem Reibbelag (6) entgegengesetzten Seite an einer Wand (10) des Bremssattels anliegt,
**dadurch gekennzeichnet, daß**
die Wand des Bremssattels mindestens einen Ansatz (11) aufweist, der sich beim Zuspannen der Bremse in die dem Reibbelag entgegengesetzte Seite der Rückenplatte eindrückt, und
der Ansatz durch spanabhebende Bearbeitung der Wand mit einem Scheibenfräser und/oder einem Walzenfräser ausgebildet ist.

6. Scheibenbremse nach Anspruch 5, **dadurch gekennzeichnet, daß** der Ansatz (11) die Form eines Dorns hat.

7. Scheibenbremse nach Anspruch 5 oder 6, **dadurch gekennzeichnet, daß** der Ansatz (11) scharfkantig ist.

8. Scheibenbremse nach einem der Ansprüche 5 bis 7, **dadurch gekennzeichnet, daß** der Ansatz (11) auf der Bremsscheibeneinlaufseite bei Vorwärtsfahrt liegt.

9. Scheibenbremse nach einem der Ansprüche 5 bis 8, **dadurch gekennzeichnet, daß** der Ansatz (11) sich in einen radial außen liegenden Abschnitt der Rückenplatte (7) eindrückt.

10. Scheibenbremse nach einem der Ansprüche 5 bis 9, **dadurch gekennzeichnet, daß** der Bremssattel (1) eine Schutzschicht aufweist, und zwar auch auf derjenigen Wand (10), an der die Rückenplatte (7) anliegt.

11. Scheibenbremse nach einem der Ansprüche 5 bis 10, **dadurch gekennzeichnet, daß** der Ansatz (11) eine Höhe von 0,1 mm bis 2 mm, bevorzugt 0,1 mm bis 0,3 mm hat.

## Claims

1. A method of producing a brake calliper (1) of a disc brake, the brake calliper having a wall (10) against which a back plate (7) of a brake shoe (8) having a friction pad (6) rests during operation,
the brake calliper being cast from a casting material,
the wall against which the back plate rests during operation being machined with a side milling cutter and/or a cylindrical milling cutter,
**characterised in that**
a projection (11) is formed by omission when machining, said projection pressing into the side of the back plate opposite the friction pad when the brake is applied.

2. The method according to Claim 1, **characterised in that** the projection (11) is formed with sharp edges.

3. The method according to Claim 1 or 2, **characterised in that** a protective layer is applied to the brake calliper (1) and also to the wall (10) against which the back plate (7) rests.

4. A brake calliper produced by the method according to any of the preceding claims.

5. A disc brake, in particular for commercial vehicles, comprising a brake calliper (1) made of casting material and
a brake shoe (8) having a back plate (7) and a friction pad (6),
the back plate resting with its side opposite the friction pad (6) against a wall (10) of the brake calliper,
**characterised in that**
the wall of the brake calliper has at least one projection (11) which presses into the side of the back plate opposite the friction pad when the brake is applied, and
the projection is formed by machining the wall with a side milling cutter and/or a cylindrical milling cutter.

6. The disc brake according to Claim 5, **characterised in that** the projection (11) is in the form of a mandrel.

7. The disc brake according to Claim 5 or 6, **characterised in that** the projection (11) has sharp edges.

8. The disc brake according to any of Claims 5 to 7, **characterised in that** the projection (11) lies on the entry side of the brake disc during forwards travel.

9. The disc brake according to any of Claims 5 to 8, **characterised in that** the projection (11) presses into a portion of the back plate (7) lying on the outside radially.

10. The disc brake according to any of Claims 5 to 9, **characterised in that** the brake calliper (1) has a protective layer and also rests on the wall (10) against which the back plate (7) rests.

11. The disc brake according to any of Claims 5 to 10, **characterised in that** the projection (11) has a height of 0.1 mm to 2 mm, preferably 0.1 mm to 0.3 mm.

## Revendications

1. Procédé de fabrication d'un étrier de frein (1) pour frein à disque, dans lequel l'étrier de frein présente une paroi (10) sur laquelle repose, en fonctionnement, une plaquette arrière (7) d'une mâchoire de frein (8) présentant une garniture de friction (6), et dans lequel l'étrier de frein est produit par moulage d'une matière coulée,
la paroi sur laquelle repose, en fonctionnement, la plaquette arrière est usinée par enlèvement de matière à l'aide d'une fraise trois tailles et/ou d'une fraise cylindrique,
**caractérisé en ce que**
une saillie (11) est produite en étant préservée de l'opération d'enlèvement de matière, laquelle saillie s'enfonce dans le côté de la plaquette arrière opposé à la garniture de friction lors de l'application du frein.

2. Procédé selon la revendication 1, **caractérisé en ce que** la saillie (11) est à arêtes vives.

3. Procédé selon la revendication 1 ou 2, **caractérisé en ce qu'**il est appliqué sur l'étrier de frein (1) une couche protectrice, de même que sur ladite paroi (10) sur laquelle repose la plaquette arrière (7).

4. Etrier de frein produit suivant le procédé selon l'une des revendications précédentes.

5. Frein à disque, notamment pour véhicule utilitaire, comportant
un étrier de frein (1) en matière moulée, et
une mâchoire de frein (8) présentant une plaquette arrière (7) et une garniture de friction (6), la plaquette arrière reposant, par son côté opposé à la garniture de friction (6), sur une paroi (10) de l'étrier de frein,
**caractérisé en ce que**
la paroi de l'étrier de frein présente au moins une saillie (11) qui s'enfonce dans le côté de la plaquette arrière opposé à la garniture de friction lors de l'application du frein, et
la saillie est conçue dans la paroi par enlèvement de matière à l'aide d'une fraise trois tailles et/ou d'une fraise cylindrique.

6. Frein à disque selon la revendication 5, **caractérisé en ce que** la saillie (11) a la forme d'une pointe.

7. Frein à disque selon la revendication 5 ou 6, **caractérisé en ce que** la saillie (11) est à arêtes vives.

8. Frein à disque selon l'une des revendications 5 à 7, **caractérisé en ce que** la saillie (11) est située du côté d'entrée du disque de frein lors de la marche avant.

9. Frein à disque selon l'une des revendications 5 à 8, **caractérisé en ce que** la saillie (11) s'enfonce dans une section radialement extérieure de la plaquette arrière (7).

10. Frein à disque selon l'une des revendications 5 à 9, **caractérisé en ce que** l'étrier de frein (1) présente une couche protectrice, ainsi que ladite paroi (10) sur laquelle repose la plaquette arrière (7).

11. Frein à disque selon l'une des revendications 5 à 10, **caractérisé en ce que** la saillie (11) présente une hauteur allant de 0,1 mm à 2 mm, de préférence de 0,1 mm à 0,3 mm.
